# EUROPÄISCHE PATENTSCHRIFT

(11) **EP 4 335 020 B1**
(45) Veröffentlichungstag und Bekanntmachung des Hinweises auf die Patenterteilung: **04.11.2026**
(21) Anmeldenummer: 22718853.9
(22) Anmeldetag: 12.04.2022
(51) Int. Cl.: H02K 3/24, H02K 5/20

(54) **WICKELKOPFKÜHLUNG**
WINDING HEAD COOLING
REFROIDISSEMENT DE TÊTE D'ENROULEMENT

(30) Priorität: 05.05.2021 DE 102021111700
(43) Veröffentlichungstag der Anmeldung: 13.03.2024
(73) Patentinhaber: Schaeffler Technologies AG & Co. KG, 91074 Herzogenaurach (DE)
(72) Erfinder: GRAMANN, Patrick, 77871 Renchen (DE); HEILMANN, Michael, 76137 Karlsruhe (DE); BINDER, Bjarne, 77933 Lahr (DE)
(74) Vertreter: Schaeffler Technologies
(86) Internationale Anmeldenummer: PCT/DE2022/100276
(87) Internationale Veröffentlichungsnummer: WO 2022/233359

(56) Entgegenhaltungen:
- CN-A- 108 011 466
- CN-A- 110 365 137
- CN-A- 112 615 445
- US-A1- 2012 025 638
- US-A1- 2017 250 591

## Beschreibung

Die Erfindung betrifft eine dynamoelektrische Maschine. Eine erfindungsgegenständliche elektrische Maschine kann beispielsweise zum Antrieb eines Elektrofahrzeuges Anwendung finden.

Bei elektrischen Maschinen entsteht im aktiven Betrieb Verlustleistung. Diese Verlustleistung erzeugt Wärme, die abgeführt werden muss, um Beschädigungen der aktiven und passiven Teile der Maschine zu vermeiden. Insbesondere im Umfeld der Elektromobilität werden sehr hohe Energiedichten für elektrische Maschinen angestrebt, um mit begrenztem Bauraum Traktionsantriebe mit hoher Leistungsfähigkeit zu ermöglichen. Derartige Energiedichten erfordern in der Regel eine aktive Kühlung, da die Abfuhr der entstehenden Wärme über eine freie Konvektion mit der Umgebungsluft in der Regel nicht die notwendige Entwärmung zu erzielen vermag. Eine solche aktive Kühlung kann beispielweise durch ein bewegtes Fluid, insbesondere eine Kühlflüssigkeit, erfolgen. Bei einer als Innenläufer ausgeführten elektrischen Maschine ist hierbei zum Beispiel ein Kühlmantel vorgesehen, der den außenliegenden Stator der Maschine umhüllt und Kühlkanäle aufweist, die von einer Kühlflüssigkeit durchströmt werden. Der Kühlmantel wird hierbei zum Beispiel auf den Stator aufgeschrumpft, um den Wärmeübergang vom Statorblechpaket zum Kühlmedium möglichst effizient zu gestalten.

Einen typischen Hotspot im Stator elektrischer Maschinen stellen häufig die axial aus dem Statorblechpaket herausragenden Wickelköpfe dar. Wird hier die maximal zulässige Temperatur überschritten, kann es zur Zerstörung der Isolation und somit zu einem Kurzschluss im Wickelkopfbereich kommen. Entsprechend lässt sich durch eine effiziente Entwärmung der Wickelköpfe der Betriebsbereich einer elektrischen Maschine erheblich erweitern und deren Energiedichte erhöhen.

Aus DE 102019216125 A1 ist ein Stator einer elektrischen Maschine bekannt mit einem Blechpaket, das axial zwischen einer ersten und einer zweiten Endscheibe angeordnet ist. In den jeweiligen Endscheiben ist mindestens eine Öffnung angeordnet, die dazu eingerichtet ist, ein Kühlmittel auf Wickelköpfe des Stators zu spritzen.

Aus CN 108 011 466 A ist eine dynamoelektrische Maschine bekannt, bei der durch stirnseitig des Stators angeordnete Ringelemente ein Kühlfluid auf die Wickelköpfe zur Entwärmung gesprüht werden kann.

Aus US 2021 / 0 025 638 A1 ist eine dynamoelektrische Maschine gemäß Oberbegriff des Anspruchs 1 bekannt.

Der Erfindung liegt die Aufgabe zugrunde, die Fluidführung bei elektrischen Maschinen mit aktiver Wickelkopfkühlung zu optimieren.

Diese Aufgabe wird durch eine dynamoelektrische Maschine mit den Merkmalen gemäß Patentanspruch 1 gelöst. Vorteilhafte Ausführungsformen der Erfindung sind den abhängigen Patentansprüchen zu entnehmen.

Die erfindungsgemäße dynamoelektrische Maschine umfasst einen Stator mit einem im Wesentlichen zylinder- oder hohlzylinderförmigen Statorkörper. Im Wesentlichen koaxial zu diesem Stator ist ein Rotor der dynamoelektrischen Maschine angeordnet. An jeder Stirnseite des Stators ist jeweils ein Ringelement angeordnet. Jedes dieser Ringelemente weist Einlassdüsen auf, durch die ein Kühlfluid auf die Wickelköpfe des Stators gesprüht werden kann.

Die Besonderheit dieser Ringelemente besteht nun darin, dass sie die auf der jeweiligen Stirnseite angeordneten Wickelköpfe radial und axial umschließen. Hierbei werden die Wickelköpfe in einem vom jeweiligen Ringelement und der jeweiligen Stirnseite des Statorkörpers begrenzten ringförmigen Raum eingehaust. Durch diese Einhausung ist gewährleistet, dass das Kühlfluid, bei dem es sich beispielsweise um eine Kühlflüssigkeit, insbesondere ein Öl, handelt, nicht in den zwischen Rotor und Stator ausgebildeten Luftspalt gelangen kann. Durch diese Lösung wird das Kühlfluid von dem Rotor ferngehalten, ohne dass eine Dichtung hierfür bereitgestellt werden muss.

Die Einlassdüsen können hierbei an radial unterschiedlichen Positionen über den Umfang des Ringelements verteilt angeordnet sein. Radial benachbart positionierte Einlassdüsen können in vorteilhafter Ausgestaltung der Erfindung so angeordnet werden, dass sie radial übereinandergeschichtete Leiter der Wickelköpfe besprühen können. Werden beispielsweise in den Nuten des Stators vier Leiter radial übereinander angeordnet, beispielsweise in Form von massiven Stableitern, insbesondere Stabwellenleiter, können für die radialen Positionen der Einlassdüsen vier unterschiedliche Lagen vorgesehen werden. Jede Position ist zur Besprühung jeweils eines der vier Leiter vorgesehen.

In vorteilhafter Ausgestaltung der Erfindung weist jedes der Ringelemente eine Auffangrinne auf. Diese kann derart angeordnet sein, dass das auf die Wickelköpfe über die Einlassdüsen gesprühte Kühlfluid in die Auffangrinne abläuft und so von einem Eindringen in den Luftspalt der Maschine gehindert ist.

Die dynamoelektrische Maschine kann ferner zwei stirnseitige Gehäuseabschnitte aufweisen. Die besagten Ringelemente können hierbei jeweils zwischen einer Stirnseite des Statorkörpers und einem der Gehäuseabschnitte derart angeordnet sein, dass zwischen jedem Ringelement und zugehörigen Gehäuseabschnitt ein Hohlraum verbleibt, der über mindestens einen Zulauf mit dem Kühlfluid füllbar ist. Dieser Hohlraum kann mit dem ringförmigen Raum über die Einlassdüsen verbunden sein, sodass der Hohlraum als Kühlmittelreservoir dient, das das Kühlmittel bereitstellt, welches über die Einlassdüsen auf die Wickelköpfe gesprüht werden kann. Die Gehäuseabschnitte können hierbei als Lagerschilde der elektrischen Maschine ausgebildet sein.

Der zwischen dem jeweiligen Gehäuseabschnitt und dem jeweiligen Ringelement ausgebildete Hohlraum kann ebenfalls ringförmig ausgebildet sein. Alternativ kann jeder Hohlraum über sich radial und axial erstreckende, am jeweiligen Ringelement angeordnete Trennwände in kreisbogenförmige Hohlraumsegmente unterteilt sein. Durch diese Einteilung des Hohlraums in mehrere kreisbogenförmige Hohlraumsegmente kann eine homogenere Besprühung der Wickelköpfe sichergestellt werden. Alternativ können die Trennwände auch am Gehäuseabschnitt, beispielsweise an einem Lagerschild, vorgesehen werden.

In weiterer vorteilhafter Ausgestaltung der Erfindung kann jedes Ringelement umfänglich verteilte Auslassöffnungen aufweisen. Jeder Gehäuseabschnitt kann einen Ablaufkanal und eine Ablauföffnung umfassen. In dieser Ausführungsform der Erfindung sind die Einlassdüsen, die Auslassöffnungen, der Ablaufkanal und die Ablauföffnung derart angeordnet, dass das durch die Einlassdüsen auf die Wickelköpfe gesprühte Kühlfluid über die Auslassöffnungen aus dem ringförmigen Raum in den im insbesondere als Lagerschild aufgeführten Gehäuseabschnitt integrierten Ablaufkanal und von dort zu der Ablauföffnung geleitet werden kann.

Hierbei können die Auslassöffnungen in die Auffangrinne integriert sein.

Um bei einer solchen Ausführungsform zu gewährleisten, dass das auf die Wickelköpfe gesprühte Kühlfluid möglichst effektiv aus dem ringförmigen Raum abgeführt wird, sind die Auslassöffnungen in der Auffangrinne durch Trennstege umfänglich voneinander getrennt. Die Trennstege erstrecken sich in radialer und axialer Richtung in den ringförmigen Raum hinein.

In der Regel ist es notwendig, den Stator der elektrischen Maschine nicht nur im Bereich der Wickelköpfe zu kühlen, sondern Wärme von seiner kompletten zylinderförmigen Außenkontur abzuführen. Häufig werden hierfür Kühlmäntel mit beispielsweise mäanderförmig verlaufenden Kühlkanälen vorgesehen, die auf das Statorblechpaket aufgeschrumpft werden. Eine besonders effektive Kühlung des Statorkörpers kann dadurch gewährleistet werden, dass dieser im Wesentlichen axial verlaufende Bohrungen aufweist, die über eine äußere Mantelfläche des Statorkörpers umfänglich verteilt sind und Statorkühlkanäle ausbilden. Diese Statorkühlkanäle können nun in vorteilhafter Ausgestaltung der Erfindung über die Einlassdüsen mit dem ringförmigen Raum zu einem gemeinsamen Kühlkreislauf verbunden werden. Die Umlenkung des Kühlfluids aus den Statorkühlkanälen in den Hohlraum zwischen den Gehäuseabschnitten und den Ringelementen kann beispielsweise durch Umlenkkanäle realisiert werden, die in den Gehäuseabschnitten integriert sind. Es können hierbei Lagerschilde als Gehäuseabschnitte vorgesehen werden, die diese Umlenkkanäle auf ihrer dem Blechpaket zugewandten Seite aufweisen.

Im Folgenden wird die Erfindung anhand der in den Figuren dargestellten Ausführungsbeispiele näher erläutert.
- FIG 1:: Eine schematische Darstellung eines Kühlfluidstromes in einer dynamoelektrischen Maschine gemäß einer Ausführungsform der Erfindung,
- FIG 2:: einen Teilquerschnitt der dynamoelektrischen Maschine nach FIG 1,
- FIG 3: eine 3-D Ansicht der dynamoelektrischen Maschine nach FIG 1
- FIG 4:: ein Ringelement und ein Gehäuseabschnitt gemäß einer Ausführungsform der Erfindung,
- FIG 5: einen vergrößerten Ausschnitt des Ringelementes nach FIG 4,
- FIG 6: einen vergrößerten Ausschnitt des Gehäuseelementes nach FIG 4,
- FIG 7: eine 3-dimensionale Darstellung eines Stators der dynamoelektrischen Maschine nach FIG 1 mit dem Ringelement und dem Gehäuseabschnitt einer Stirnseite,
- FIG 8: Stator, Ringelement und Gehäuseabschnitte aus FIG 7 in einer Explosionsdarstellung
- FIG 9: eine schematische Darstellung eines Kühlfluidstromes in einer dynamoelektrischen Maschine gemäß einer weiteren Ausführungsform der Erfindung,
- FIG 10:: eine 3-D Ansicht der dynamoelektrischen Maschine nach FIG 9,
- FIG 11:: eine weitere Ausführungsform eines Ringelementes
- FIG 12: das Ringelement nach FIG 11 aus einer alternativen Perspektive,
- FIG 13: ein Ausschnitt des Ringelementes nach FIG 11,
- FIG 14: einen Ausschnitt des Ringelementes nach FIG 11 mit einem zugehörigen Gehäuseabschnitt.
- FIG 15: eine Ansicht auf das Ringelement nach FIG 11 eingesetzt in den zugehörigen Gehäuseabschnitt,
- FIG 16: eine Explosionsdarstellung des Ringelementes und Gehäuseabschnittes nach FIG 15,
- FIG 17: der Gehäuseabschnitt nach FIG 15 und 16 und
- FIG 18: einen Kühlmittelstrom innerhalb des Gehäuseabschnittes nach FIG 17.

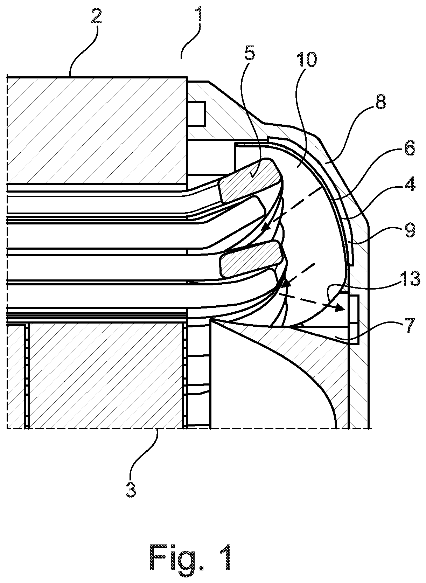

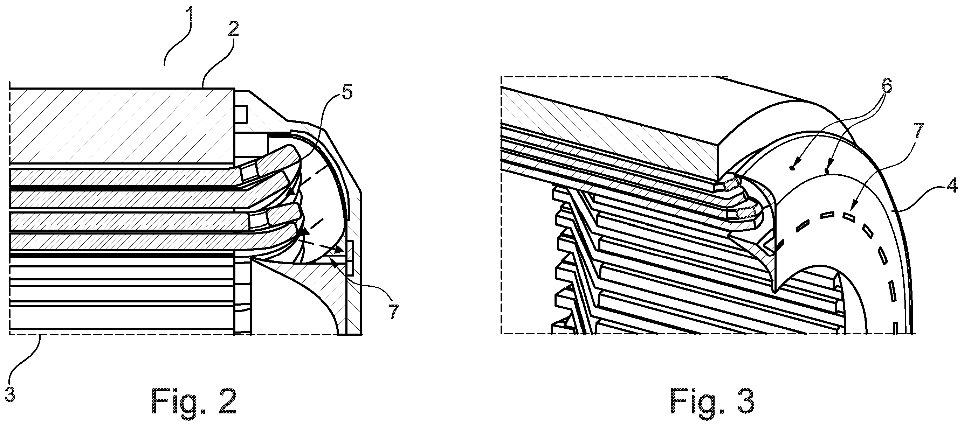

Figur 1 zeigt eine schematische Darstellung eines Kühlfluidstromes in einer dynamoelektrischen Maschine gemäß einer Ausführungsform der Erfindung. Figur 2 zeigt einen Teilquerschnitt und Figur 3 eine 3D-Ansicht dieser dynamoelektrischen Maschine.

Die Maschine umfasst einen Stator 1 mit einem als Statorblechpaket ausgebildeten Statorkörper 2, der im Wesentlichen axial verlaufende Nuten aufweist, in die eine Statorwicklung eingelegt ist. Die Maschine umfasst des Weiteren einen Rotor 3, der im Wesentlichen koaxial zum Stator 1 angeordnet ist und über einen Luftspalt vom Stator 1 beabstandet ist. Die Figuren 1 und 2 zeigen einen Teilquerschnitt der Maschine an einem stirnseitigen Ende. An diesem stirnseitigen Ende wie auch an dem nicht dargestellten gegenüberliegenden stirnseitigen Ende ragen Wickelköpfe 5 aus dem Statorkörper 2 hervor. Diese Wickelköpfe 5 werden radial und axial von einem Ringelement 4 umschlossen. Durch dieses Ringelement 4 werden die Wickelköpfe an der jeweiligen Stirnseite des Statorkörpers 2 in einem ringförmigen Raum 10 eingehaust. Innerhalb dieses ringförmigen Raumes 10 werden die Wickelköpfe 5 mit einem Kühlmittel, beispielsweise einem Öl, besprüht. Dieses Öl gelangt durch Einlassdüsen 6 in den ringförmigen Raum 10. Die Einlassdüsen 6 sind radial so angeordnet, dass für jede Lage der Leiter im Wickelkopfbereich mindestens eine Einlassdüse 6 vorgesehen ist. Umfänglich sind in jeder Radialposition mehrere Einlassdüsen 6 verteilt angeordnet.

Das Ringelement 4 ist von einem stirnseitigen Gehäuseabschnitt 8 umgeben, der als Lagerschild der dynamoelektrischen Maschine ausgebildet ist. Axial betrachtet befindet sich zwischen dem Lagerschild und dem Ringelement 4 ein Hohlraum 9. Innerhalb dieses Hohlraumes 9 befindet sich ein Reservoir von flüssigmen Kühlmittel, das durch einen nicht dargestellten Zufluss in den Hohlraum 9 gelangt. Durch die Einlassdüsen 6 wird dieses Kühlmittel aus dem Hohlraum 9 auf die Wickelköpfe 5 innerhalb des ringförmigen Raumes 10 gesprüht. Das Kühlmittel tropft von den Wickelköpfen 5 ab und landet in einer Auffangrinne 13 des Ringelementes 4. Innerhalb dieser Auffangrinne 13 sind umfänglich verteilt Auslassöffnungen 7 angeordnet, aus denen das Kühlmittel aus dem ringförmigen Raum 10 schließlich wieder abfließen kann.

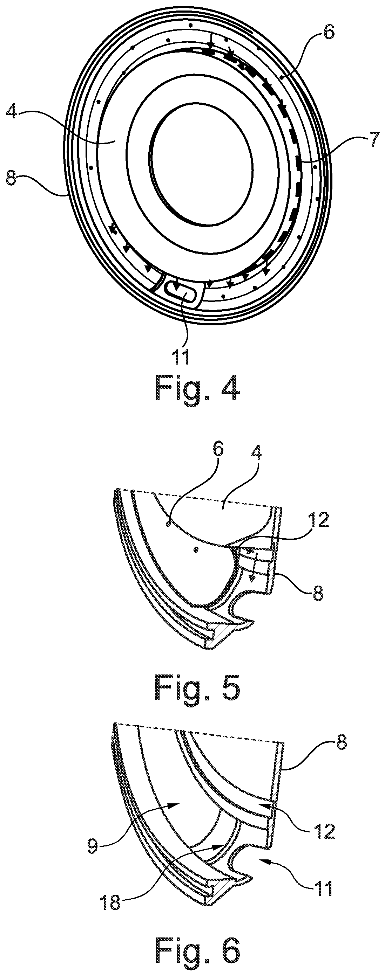

Figur 4 zeigt ein Ringelement 4 und einen Gehäuseabschnitt 8 gemäß einer Ausführungsform der Erfindung. Figur 5 zeigt einen vergrößerten Ausschnitt des Ringelementes 4 nach Figur 4 und Figur 6 einen vergrößerten Ausschnitt des Gehäuseelementes 8 nach Figur 4. Zudem ist in den Figuren 4 bis 6 der Kühlmittelstrom mithilfe von Pfeilen veranschaulicht. Wie in Figur 4 zu erkennen ist, fließt das durch die Einlassdüsen 6 in den ringförmigen Raum 10 eingesprühte Kühlmittel, nachdem es die Wickelköpfe 5 benetzt hat, durch die Auslassöffnungen 7 im oberen Bereich des ringförmigen Elementes 4 aus dem ringförmigen Raum 10 ab. Von dort aus gelangt es in einen in Figur 5 erkennbaren Ablaufkanal 12, der sich zwischen dem Ringelement 4 und dem Gehäuseabschnitt 8 befindet. Durch diesen Ablaufkanal 12 fließt das im oberen Bereich des Ringelements 4 eingespritzte Kühlmittel schließlich zu einer AblaufÖffnung 11, die sich im Gehäuseabschnitt 8 unten befindet. Von dort kann das Kühlmittel beispielsweise einem Wärmetauscher zugeführt werden.

Wie in Figur 4 zu erkennen ist, fließt das in der oberen Hälfte des ringförmigen Raumes eingespritzte Kühlmittel durch die Auslassöffnungen 7 ab in den Ablaufkanal 12. Im unteren Bereich des ringförmigen Raumes hingegen fließt das im oberen Bereich in die Auslassöffnungen eintretende Kühlmittel wieder aus dem Ablaufkanal 12 ab, um so schließlich über die Ablauföffnung 11 den ringförmigen Raum 10 zu verlassen.

In Figur 6 ist ein Hohlraum 9 innerhalb des Gehäuseabschnittes 8, das hier als Lagerschild ausgebildet ist, zu erkennen. Dieser Hohlraum 9 bildet ein Reservoir für das Kühlmittel. Wenn das Ringelement 4 auf das Lagerschild gesetzt wird, kann das Kühlmittel durch die Einlassdüsen 6 schließlich in den ringförmigen Raum 10 gelangen und dort die Wickelköpfe 5 besprühen (siehe hierzu Figur 5). Das Lagerschild umfasst eine Dichtung 18, die um die Ablauföffnung 11 innerhalb des Hohlraumes 9 angeordnet ist, um ein Austreten des Kühlmittels aus dem als Kühlmittelreservoir dienenden Hohlraum 9 direkt zum Ablauf 11 zu verhindern.

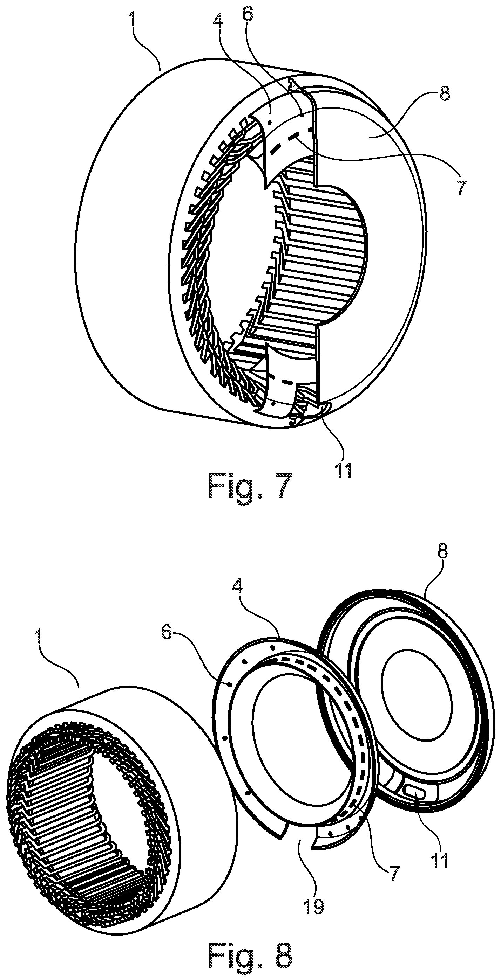

Figur 7 zeigt eine dreidimensionale Darstellung eines Stators 1 der dynamoelektrischen Maschine nach Figur 1 mit dem Ringelement 4 und dem als Lagerschild ausgebildeten Gehäuseabschnitt einer Stirnseite. In Figur 8 sind Stator 1, Ringelement 4 und Gehäuseabschnitte 8 aus Figur 7 in einer Explosionsdarstellung wiedergegeben. In Figur 8 ist gut zu erkennen, dass das Ringelement 4 in seinem unteren Bereich bei sechs Uhr eine Aussparung 19 besitzt. Durch diese Aussparung 19 kann das Kühlfluid zur Ablauföffnung 11 im Lagerschild gelangen und von da aus beispielsweise einem Wärmetauscher zugeführt werden.

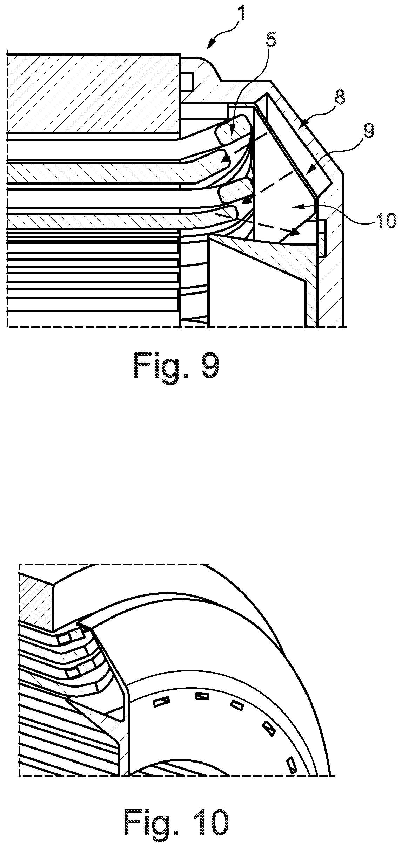

Figur 9 zeigt eine schematische Darstellung eines Kühlfluidstromes in einer dynamoelektrischen Maschine gemäß einer weiteren Ausführungsform der Erfindung. Figur 10 zeigt eine 3D-Ansicht der dynamoelektrischen Maschine nach Figur 9. Funktional gleiche Elemente sind mit den gleichen Bezugszeichen versehen, wie sie für die zuvor dargestellte Ausführungsform verwendet wurden. Im Wesentlichen unterscheidet sich diese Ausführungsform in der Formgebung des Gehäuseabschnittes 8, der auch hier als Lagerschild ausgebildet ist, und der geometrischen Gestalt des Ringelementes 4. Ringelement 4 und Lagerschild sind im Vergleich zu der Ausführungsform nach den Figuren 1 bis 3 durch eine etwas kantigere Formgebung gestaltet.

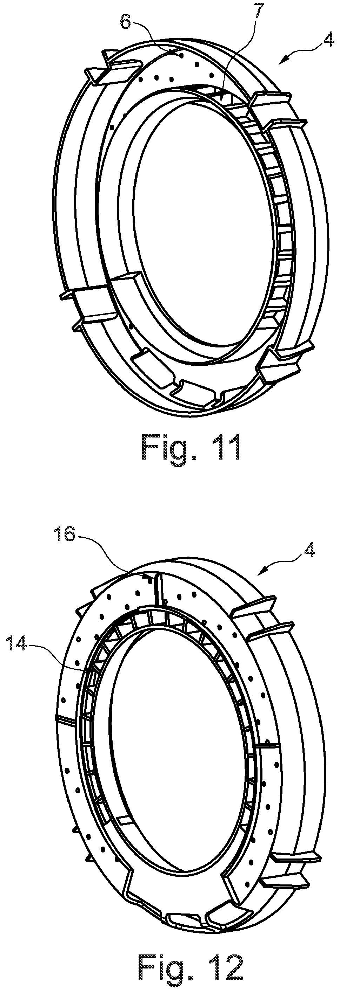

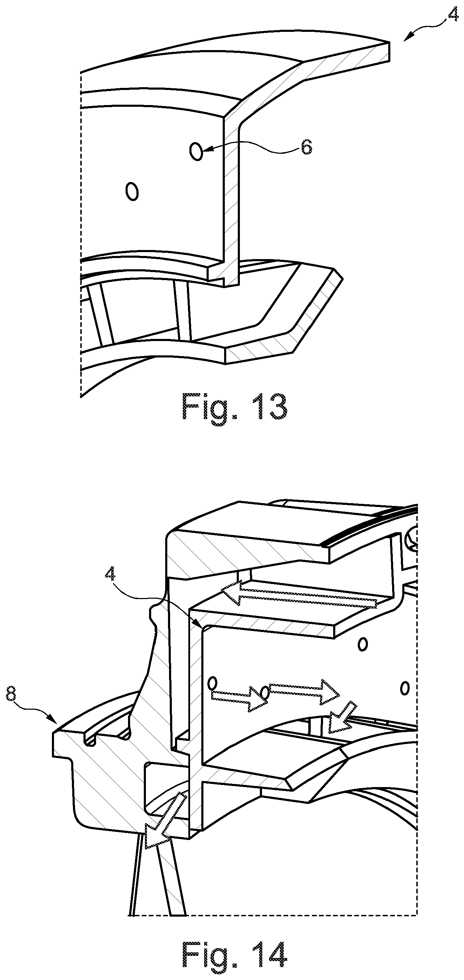

Figur 11 zeigt eine weitere Ausführungsform eines Ringelementes 4. Figur 12 zeigt dieses Ringelement aus einer alternativen Perspektive. Figur 13 zeigt einen Ausschnitt des Ringelementes 4 nach Figur 11 und Figur 14 einen Ausschnitt des Ringelementes nach Figur 11 mit einem zugehörigen Gehäuseabschnitt 8. Die hier gezeigte Ausführungsform eines Ringelementes 4 kennzeichnet sich durch Trennstege 14, die in Umfangsrichtung betrachtet an jede Auslassöffnung 7 des Ringelementes 4 angrenzen und sich in axialer und radialer Richtung erstrecken. Durch diese Trennstege 14 ist gewährleistet, dass das im oberen Bereich in den ringförmigen Raum durch die Einlassdüsen 6 eingespritzte Kühlmittel nach dem Benetzen der Wickelköpfe 5 direkt aus den Auslassöffnungen 7 in den Ablaufkanal 12 gelangt. Es wird demnach verhindert, dass das Kühlmittel nach Aufnahme der Wärme von den Wickelköpfen 5 zunächst noch entlang der Auffangrinne 13 weiterfließen kann. Auf diese Art und Weise wird der Austausch des Kühlmittels im ringförmigen Raum 10 beschleunigt und damit die Entwärmung der Wickelköpfe 5 noch weiter verbessert. Ebenfalls in Figur 12 zu erkennen sind Trennwände 16, die sich auf der den stirnseitigen Gehäuseabschnitten 8 zugewandten Seite der Ringelemente 4 in axialer Richtung erstrecken und so den Hohlraum 9 zwischen dem Ringelement 4 und dem zugehörigen, insbesondere als Lagerschild ausgebildeten Gehäuseabschnitt 8 in einzelne kreisbogenförmige Segmente unterteilen. Diese Unterteilung hilft, das Kühlmittel in dem durch die einzelnen Segmente bereitgestellten Kühlmittelreservoir homogener über den Umfang zu verteilen.

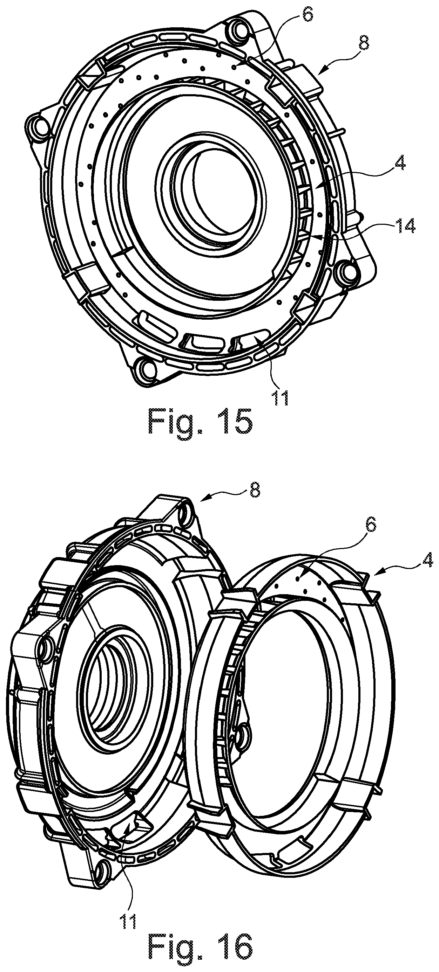

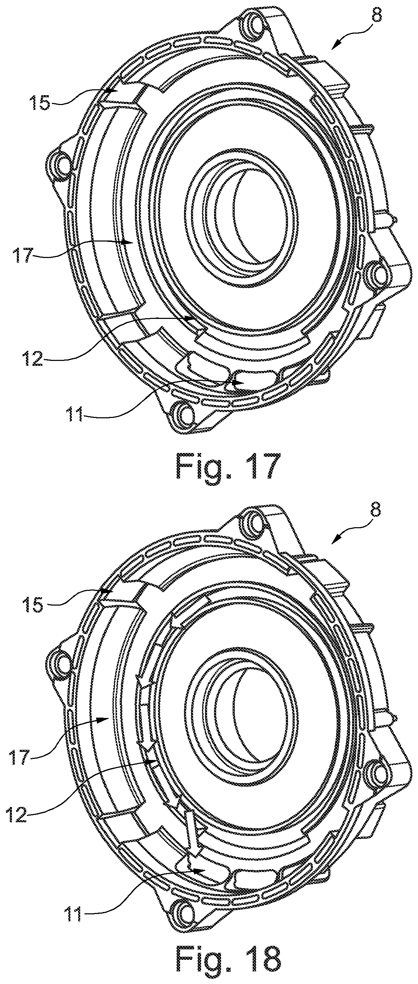

Figur 14 zeigt einen Ausschnitt des Ringelements 4 nach Figur 11 mit einem zugehörigen Gehäuseabschnitt 8. Beide Elemente sind in Figur 16 in einer Explosionsdarstellung noch einmal zu erkennen. Der Gehäuseabschnitt 8 ist in den Figuren 17 und 18 noch einmal separat dargestellt, wobei in der Figur 18 der Kühlmittelstrom innerhalb des Gehäuseabschnittes 8 zu erkennen ist. Figur 15 gewährt einen Einblick auf das Ringelement 4 eingesetzt in den als Lagerschild ausgebildeten Gehäuseabschnitt 8 in dem zwischen der nicht dargestellten Stirnseite des Stators und dem Ringelement 4 erzeugten ringförmigen Raum 10. Hier ist gut erkennbar, wie ein durch die Einlassdüsen 6 eingesprühtes Kühlmittel durch die Trennstege 14 im über der Symmetrieachse der dynamoelektrischen Maschine liegenden Bereich direkt in den Ablaufkanal 12 geleitet wird, von wo es aus den Auslassöffnungen 7, die sich unterhalb der Symmetrieachse des Stators befinden, in die Auffangrinne 13 abtropft und von dort durch Aussparungen im Ringelement 4 zur Ablauföffnung 11 gelangt. Mithilfe der Figur 18 lässt sich der Kühlmittelstrom innerhalb des Lagerschildes gut nachvollziehen. An einem Einlass 15, der beispielsweise mit axial im Statorkörper verlaufenden Kühlkanälen verbunden ist, gelangt das Kühlmittel zunächst in einen Einlassring 17. Dieser Einlassring 17 bildet den Hohlraum 9 und damit das Kühlmittelreservoir, aus dem das Kühlmittel durch die Einlassdüsen 6 in den ringförmigen Raum 10 gelangt. Von dort tropft es in die Auffangrinne 13 ab und gelangt durch die Auslassöffnungen 7 in den im Lagerschild integrierten Ablaufkanal 12. Dort läuft das Kühlmittel entlang und verlässt das Lagerschild schließlich an der Ablauföffnung 11.

### Bezugszeichenliste

- 1: Stator
- 2: Statorkörper
- 3: Rotor
- 4: Ringelemente
- 5: Wickelköpfe
- 6: Einlassdüsen
- 7: Auslassöffnungen
- 8: stirnseitige Gehäuseabschnitte
- 9: Hohlraum
- 10: ringförmiger Raum
- 11: Ablauföffnung
- 12: Ablaufkanal
- 13: Auffangrinne
- 14: Trennstege
- 15: Einlass
- 16: Trennwände
- 17: Einlassring
- 18: Dichtung
- 19: Aussparung

## Patentansprüche

1. Dynamoelektrische Maschine mit
• einem Stator (1) mit einem im Wesentlichen zylinder- oder hohlzylinderförmigen Statorkörper (2),
• einem im Wesentlichen koaxial zum Stator angeordneten Rotor (3)
• zwei Ringelementen (4), von denen jeweils eines an jeder Stirnseite des Statorkörpers (2) angeordnet ist,
• wobei jedes Ringelement (4) Einlassdüsen (6) aufweist, durch die ein Kühlfluid auf die Wickelköpfe (5) des Stators (1) gesprüht werden kann,
• wobei jedes Ringelement (4) die auf der jeweiligen Stirnseite angeordneten Wickelköpfe (5) radial und axial umschließt, so dass die Wickelköpfe (5) in einem von dem jeweiligen Ringelement (4) und der jeweiligen Stirnseite des Statorkörpers (2) begrenzten ringförmigen Raum (10) eingehaust sind,
**gekennzeichnet durch**
zwei stirnseitige Gehäuseabschnitte (8), wobei die Ringelemente (4) jeweils zwischen einer Stirnseite des Statorkörpers (2) und einem der Gehäuseabschnitte (8) derart angeordnet sind, dass zwischen jedem Ringelement (4) und zugehörigen Gehäuseabschnitt (8) ein Hohlraum (9) verbleibt, der über mindestens einen Zulauf mit dem Kühlfluid füllbar ist, wobei der Hohlraum (9) mit dem ringförmigen Raum (10) über die Einlassdüsen (6) verbunden ist.

2. Dynamoelektrische Maschine nach Anspruch 1, wobei die Einlassdüsen (6) an radial unterschiedlichen Positionen über den Umfang des Ringelementes (4) verteilt angeordnet sind derart, dass radial benachbart positionierte Einlassdüsen (6) radial übereinandergeschichtete Leiter der Wickelköpfe (5) besprühen können.

3. Dynamoelektrische Maschine nach Anspruch 1 oder 2, wobei die Ringelemente (4) jeweils eine Auffangrinne (13) aufweisen, die derart angeordnet ist, dass das auf die Wickelköpfe (5) gesprühte Kühlfluid in die Auffangrinne (13) abläuft und so von einem Eindringen in den Luftspalt der Maschine gehindert ist.

4. Dynamoelektrische Maschine nach einem der vorstehenden Ansprüche, wobei die Gehäuseabschnitte (8) als Lagerschilde ausgebildet sind.

5. Dynamoelektrische Maschine nach einem der vorstehenden Ansprüche, wobei jeder Hohlraum (9) über sich radial und axial erstreckende, am jeweiligen Ringelement (4) angeordnete Trennwände (16) in kreisbogenförmige Hohlraumsegmente unterteilt ist.

6. Dynamoelektrische Maschine nach einem der vorstehenden Ansprüche, wobei jedes Ringelement (4) umfänglich verteilte Auslassöffnungen (7), und jeder Gehäuseabschnitt (8) einen Ablaufkanal (12) und eine Ablauföffnung (11) umfasst, wobei die Einlassdüsen (6), die Auslassöffnungen (7), der Ablaufkanal (12) und die Ablauföffnung (11) derart angeordnet sind, dass das durch die Einlassdüsen (6) auf die Wickelköpfe (5) gesprühte Kühlfluid über die Auslassöffnungen (7) aus dem ringförmigen Raum in den Ablaufkanal (12) und von dort zu der Ablauföffnung (11) geleitet werden kann.

7. Dynamoelektrische Maschine nach Anspruch 3 und 6, wobei die Auslassöffnungen (11) in die Auffangrinne (13) integriert sind.

8. Dynamoelektrische Maschine nach Anspruch 7, wobei die Auslassöffnungen (11) in der Auffangrinne (13) durch Trennstege (14) umfänglich voneinander getrennt sind, die sich in radialer und axialer Richtung in den ringförmigen Raum (10) erstrecken.

9. Dynamoelektrische Maschine nach einem der vorstehenden Ansprüche, wobei der Statorkörper (2) im Wesentlichen axial verlaufenden Bohrungen aufweist, die über eine äußere Mantelfläche des Statorkörpers (2) umfänglich verteilt sind und Statorkühlkanäle ausbilden, wobei die Statorkühlkanäle über die Einlassdüsen (6) mit dem ringförmigen Raum (4) zu einem gemeinsamen Kühlkreislauf verbunden sind.

## Claims

1. A dynamoelectric machine comprising
• a stator (1) having a substantially cylindrical or hollow-cylindrical stator body (2),
• a rotor (3) arranged substantially coaxially with respect to the stator,
• two ring elements (4), one of which is arranged on each end face of the stator body (2),
• each ring element (4) having inlet nozzles (6) through which a cooling fluid can be sprayed onto the winding heads (5) of the stator (1),
• each ring element (4) radially and axially surrounding the winding heads (5) arranged on the respective end faces so that the winding heads (5) are enclosed in an annular space (10) bounded by the respective ring elements (4) and the respective end faces of the stator body (2),
**characterised by**
two end-face housing portions (8), wherein the ring elements (4) are each arranged between an end face of the stator body (2) and one of the housing portions (8) such that a cavity (9) remains between each ring element (4) and the associated housing portion (8), which cavity can be filled with the cooling fluid via at least one inlet, the cavity (9) being connected to the annular space (10) via the inlet nozzles (6).

2. The dynamoelectric machine according to claim 1, wherein the inlet nozzles (6) are arranged at radially different positions in a manner distributed over the circumference of the ring element (4) such that radially adjacently positioned inlet nozzles (6) can spray radially stacked conductors of the winding heads (5).

3. The dynamoelectric machine according to claim 1 or 2, wherein the ring elements (4) each have a collecting groove (13) arranged such that the cooling fluid sprayed onto the winding heads (5) runs into the collecting groove (13) and is thus prevented from entering the air gap of the machine.

4. The dynamoelectric machine according to any one of the preceding claims, wherein the housing portions (8) are formed as bearing shields.

5. The dynamoelectric machine according to any one of the preceding claims, wherein each cavity (9) is subdivided into arcuate cavity segments by means of radially and axially extending partition walls (16) arranged on the ring element (4).

6. The dynamoelectric machine according to any one of the preceding claims, wherein each ring element (4) comprises circumferentially distributed outlet openings (7) and each housing portion (8) comprises a drain channel (12) and a drain opening (11), wherein the inlet nozzles (6), the outlet openings (7), the drain channel (12), and the drain opening (11) are arranged such that the cooling fluid sprayed onto the winding heads (5) through the inlet nozzles (6) can be directed from the annular space into the drain channel (12) and from there to the drain opening (11) via the outlet openings (7).

7. The dynamoelectric machine according to claims 3 and 6, wherein the outlet openings (11) are integrated in the collecting groove (13).

8. The dynamoelectric machine according to claim 7, wherein the outlet openings (11) in the collecting groove (13) are circumferentially separated from each other by separating bridging pieces (14) which extend radially and axially into the annular space (10).

9. The dynamoelectric machine according to any one of the preceding claims, wherein the stator body (2) has substantially axially running bores which are distributed circumferentially over an outer lateral surface of the stator body (2) and form stator cooling channels, the stator cooling channels being connected to the annular space (4) via the inlet nozzles (6) to form a common cooling circuit.

## Revendications

1. Machine dynamoélectrique comprenant
• un stator (1) comprenant un corps de stator (2) sensiblement cylindrique ou cylindrique creux,
• un rotor (3) disposé sensiblement coaxialement au stator
• deux éléments annulaires (4), dont l'un est disposé sur chaque face frontale du corps de stator (2),
• chaque élément annulaire (4) comportant des buses d'entrée (6) à travers lesquelles un fluide de refroidissement peut être pulvérisé sur les têtes d'enroulement (5) du stator (1),
• chaque élément annulaire (4) entourant radialement et axialement les têtes d'enroulement (5) disposées sur la face frontale respective, de telle sorte que les têtes d'enroulement (5) soient enfermées dans un espace annulaire (10) délimité par l'élément annulaire (4) respectif et la face frontale respective du corps de stator (2),
**caractérisée par**
deux sections de boîtier (8) frontales, les éléments annulaires (4) étant chacun disposés entre une face frontale du corps de stator (2) et l'une des sections de boîtier (8), de telle sorte qu'une cavité (9) demeure entre chaque élément annulaire (4) et la section de boîtier (8) associée, qui peut être remplie de fluide de refroidissement via au moins une entrée, la cavité (9) étant reliée à l'espace annulaire (10) via les buses d'entrée (6).

2. Machine dynamoélectrique selon la revendication 1, dans laquelle les buses d'entrée (6) sont réparties à des positions radialement différentes autour de la circonférence de l'élément annulaire (4), de telle sorte que les buses d'entrée (6) radialement adjacentes puissent asperger les conducteurs des têtes d'enroulement (5) empilés radialement.

3. Machine dynamoélectrique selon la revendication 1 ou 2, dans laquelle les éléments annulaires (4) comportent chacun une gouttière de collecte (13) disposée de telle sorte que le fluide de refroidissement pulvérisé sur les têtes d'enroulement (5) s'écoule dans la gouttière de collecte (13) et ainsi ne puisse pas pénétrer dans l'entrefer de la machine.

4. Machine dynamoélectrique selon l'une quelconque des revendications précédentes, dans laquelle les sections de boîtier (8) sont conçues comme des cloisons.

5. Machine dynamoélectrique selon l'une quelconque des revendications précédentes, dans laquelle chaque cavité (9) est subdivisée en segments de cavité en forme d'arc au moyen de parois de séparation (16) s'étendant radialement et axialement disposées sur l'élément annulaire (4) respectif.

6. Machine dynamoélectrique selon l'une quelconque des revendications précédentes, dans laquelle chaque élément annulaire (4) comprend des ouvertures de sortie (7) réparties circonférentiellement, et chaque section de boîtier (8) comprend un canal de drainage (12) et une ouverture de drainage (11), dans laquelle les buses d'entrée (6), les ouvertures de sortie (7), le canal de drainage (12) et l'ouverture de drainage (11) sont disposés de telle sorte que le fluide de refroidissement pulvérisé sur les têtes d'enroulement (5) à travers les buses d'entrée (6) puisse être dirigé de l'espace annulaire vers le canal de drainage (12) et de là, vers l'ouverture de drainage (11) via les ouvertures de sortie (7).

7. Machine dynamoélectrique selon la revendication 3 et 6, dans laquelle les ouvertures de sortie (11) sont intégrées dans la gouttière de collecte (13).

8. Machine dynamoélectrique selon la revendication 7, dans laquelle les ouvertures de sortie (11) dans la gouttière de collecte (13) sont séparées circonférentiellement les unes des autres par des séparateurs (14) qui s'étendent dans les directions radiale et axiale dans l'espace annulaire (10).

9. Machine dynamoélectrique selon l'une quelconque des revendications précédentes, dans laquelle le corps de stator (2) comporte des alésages s'étendant sensiblement axialement qui sont répartis circonférentiellement sur une surface extérieure du corps de stator (2) et forment des canaux de refroidissement du stator, les canaux de refroidissement du stator étant reliés à l'espace annulaire (4) via les buses d'entrée (6) pour former un circuit de refroidissement commun.
